# EUROPÄISCHE PATENTSCHRIFT

(11) **EP 2 806 103 B1**
(45) Veröffentlichungstag und Bekanntmachung des Hinweises auf die Patenterteilung: **17.07.2019**
(21) Anmeldenummer: 13169058.8
(22) Anmeldetag: 24.05.2013
(51) Int. Cl.: F01D 5/14, F04D 29/68

(54) **Schaufelgitter und Strömungsmaschine**
Cascade and turbo-engine
Grille d'aubes et turbomachine

(43) Veröffentlichungstag der Anmeldung: 26.11.2014
(73) Patentinhaber: MTU Aero Engines AG, 80995 München (DE)
(72) Erfinder: Mahle, Inga, 77880 Sasbach (DE); Pernleitner, Martin, 85221 Dachau (DE); Engel, Karl, 85221 Dachau (DE)

(56) Entgegenhaltungen:
- EP-A1- 2 136 033
- EP-A1- 2 581 555
- EP-A2- 2 003 292
- WO-A1-98/44240
- WO-A1-2012/157498
- WO-A2-2011/039352
- DE-A1-102008 031 789

## Beschreibung

Die Erfindung betrifft ein Schaufelgitter einer Strömungsmaschine nach dem Oberbegriff des Patentanspruchs 1 und eine Strömungsmaschine.

Zur Minimierung von Sekundärströmungen sind Schaufelgitter in Strömungsmaschinen wie Gasturbinen und insbesondere Flugtriebwerken häufig mit einer nabenseitigen und/oder gehäuseseitigen Seitenwandkonturierung versehen, die einen von einem Heißgas durchströmten Heißgaskanal der Strömungsmaschine begrenzt. Aus Gründen der Spalthaltung eines Axialspaltes zu einem stromaufwärtigen Schaufelgitter ist eine Seitenwandvorderkante herkömmlicherweise umfangssymmetrisch ausgebildet nicht somit nicht-konturiert. Aus der US 20100172749 A1 ist jedoch ein Schaufelgitter mit einer umfangsasymmetrischen Seitenwandvorderkante bekannt, die mit einer wellenförmigen Kantenkonturierung versehen ist, die sich pauschal aus einer Vielzahl von in Strömungsrichtung des Heißgases bzw. Axialrichtung der Strömungsmaschine abgerundeten oder angestellten Flächen zusammensetzt. WO2012157498A1 offenbart ein Schaufelgitter mit den Merkmalen des Oberbegriffs vom Anspruch 1.

Aufgabe der Erfindung ist es, ein Schaufelgitter einer Strömungsmaschine zu schaffen, das eine alternative Seitenvorderkantenkonturierung aufweist. Des Weiteren ist es Aufgabe der Erfindung eine Schaufel für ein derartiges Schaufelgitter und eine Strömungsmaschine mit einem derartigen Schaufelgitter zu schaffen.

Diese Aufgabe wird gelöst durch ein Schaufelgitter mit den Merkmalen des Patentanspruchs 1 und durch eine Strömungsmaschine mit den Merkmalen des Patentanspruchs 11.

Ein erfindungsgemäßes Schaufelgitter einer Strömungsmaschine hat eine innere Seitenwand und eine äußere Seitenwand zum Begrenzen eines von einem Heißgas durchströmten Heißgaskanals der Strömungsmaschine. Zumindest eine der Seitenwände hat eine abgerundete Seitenwandvorderkante hat, die mit einer umfangsasymmetrischen

Kantenkonturierung versehen ist, die elliptisch ist oder aus einem oder mehreren Kreissegmenten zusammengesetzt ist.

Die elliptische Ausbildung der Kantenkonturierung und/oder die Bildung der umfangsasymmetrischen Kantenkonturierung aus einer Vielzahl von Kreissegmenten in Strömungsrichtung des Heißgases bzw. in Axialrichtung der Strömungsmaschine betrachtet bewirkt eine Reduktion von Sekundärströmungen im Bereich der Seitenwandvorderkante gegenüber einem Schaufelgitter mit einer umfangssymmetrischen Seitenwandvorderkante. Des Weiteren wird beispielsweise durch die Kantenkonturierung an einer inneren bzw. nabenseitigen Seitenwandvorderkante eine Variationsreduzierung eines statischen Drucks in Umfangsrichtung im Heißgaskanal und im inneren Kühlkanal erzielt, was zu einer Reduzierung von lokalen Ein- und Ausströmintensitäten führt, wodurch Mischungsverluste zwischen dem Heißgas und Kühlluft reduziert werden. Zudem kann eine Leckageströmung mit ihren Strömungsstrukturen gezielt auf eine Sekundärströmung im Schaufelgitter abgestimmt werden.

Bei einem bevorzugten Ausführungsbeispiel ist die Kantenkonturierung in Umfangsrichtung betrachtet wellenartig. Die Wellenkontur kann beispielsweise durch jeweils zwei Erhebungen und durch eine zwischen den Erhebungen angeordnete Vertiefung gebildet werden, wobei sich die Erhebungen über Seitenkanten der jeweils benachbarten Schaufeln erstrecken, so dass auf jeder Schaufel in deren Seitenkantenbereich zwei Erhebungsabschnitte gebildet sind, die jeweils mit einem korrespondierenden Erhebungsabschnitt der benachbarten Schaufel eine Erhebung bilden. Die Erhebungen und Vertiefungen beziehen sich jeweils auf eine ideale umfangssymmetrische Seitenwandvorderkante und bewirken eine weitere Reduzierung von Sekundärströmungen.

Eine wurzelseitige Anströmung von Schaufelblättern des Schaufelgitters lässt sich verbessern, wenn Wurzelausrundungen der Schaufelblätter in die Kantenkonturierung hineingeführt sind.

Die Sekundärströmungen lassen sich in Strömungsrichtung über die gesamte Seitenwand reduzieren, wenn ebenfalls die Seitenwand gemäß Anspruch 1 konturiert ist und insbesondere dann die Seitenwandkonturierung in die Seitenwandkonturierung integriert ist.

Um einen vorderen Axialspalt trotz der Kantenkonturierung minimal zu halten, ist ein vorderer Seitenwandüberhang bevorzugterweise konturfrei und somit umfangssymmetrisch.

Zur Reduzierung eines konstruktiven und fertigungstechnischen Aufwandes kann ein hinterer Seitenwandüberhang konturfrei und somit umfangssymmetrisch sein.

Eine erfindungsgemäße Schaufel hat eine Plattform, deren Plattformvorderkante abgerundet ist und eine Kantenkonturierung aufweist, die elliptisch ist oder aus mehreren Kreissegmenten zusammengesetzt ist. Eine Vielzahl von derartigen Schaufeln ermöglicht die Bildung eines erfindungsgemäßen Schaufelgitters einer Strömungsmaschine, mittels dem seienwandseitige Sekundärströmungen im Heißgaskanal, statische Druckunterschiede und Mischungsverluste reduziert werden können. Zudem können Leckageströme gezielt durch das Schaufelgitter geführt werden.

Eine erfindungsgemäße Strömungsmaschine weist zumindest ein erfindungsgemäßes Schaufelgitter auf. Eine derartige Strömungsmaschine wie eine Gasturbine und insbesondere ein Flugtriebwerk zeichnet sich durch einen höheren Wirkungsgrad aus, da seitenwandseitige Sekundärströmungen im Heißgaskanal, statische Druckunterschiede und Mischungsverluste reduziert werden können. Zudem können Leckageströme gezielt durch das Schaufelgitter geführt werden. Bevorzugterweise ist das zumindest eine Schaufelgitter turbinenseitig und beispielsweise in einer Niederdruckturbine der Strömungsmaschine angeordnet.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: einen perspektivische Darstellung eines Teilbereichs eines erfindungsgemäßen Schaufelgitters mit einem ersten Ausführungsbeispiel einer erfindungsgemäßen Schaufel,
- Figur 2: einen Umfangsabschnitt eines erfindungsgemäßen Schaufelgitter mit einem zweiten Ausführungsbeispiel der erfindungsgemäßen Schaufel,
- Figur 3: eine Seitendarstellung eines dritten Ausführungsbeispiels der erfindungsgemäßen Schaufel,
- Figur 4: einen Umfangsabschnitt eines erfindungsgemäßen Schaufelgitter mit einem vierten Ausführungsbeispiel der erfindungsgemäßen Schaufel,
- Figur 5: eine perspektivische Darstellung eines nicht zur Erfindung gehörenden Beispiels einer Schaufel, und
- Figur 6: eine Seitendarstellung der Schaufeln aus Figur 5.

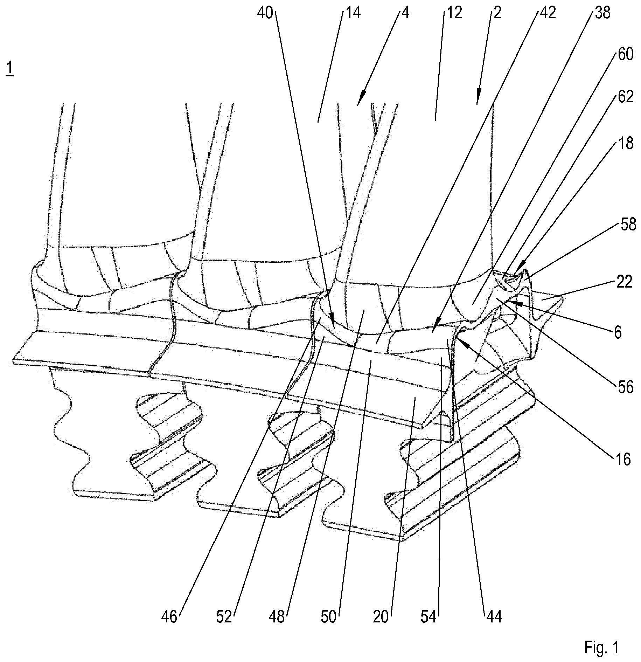

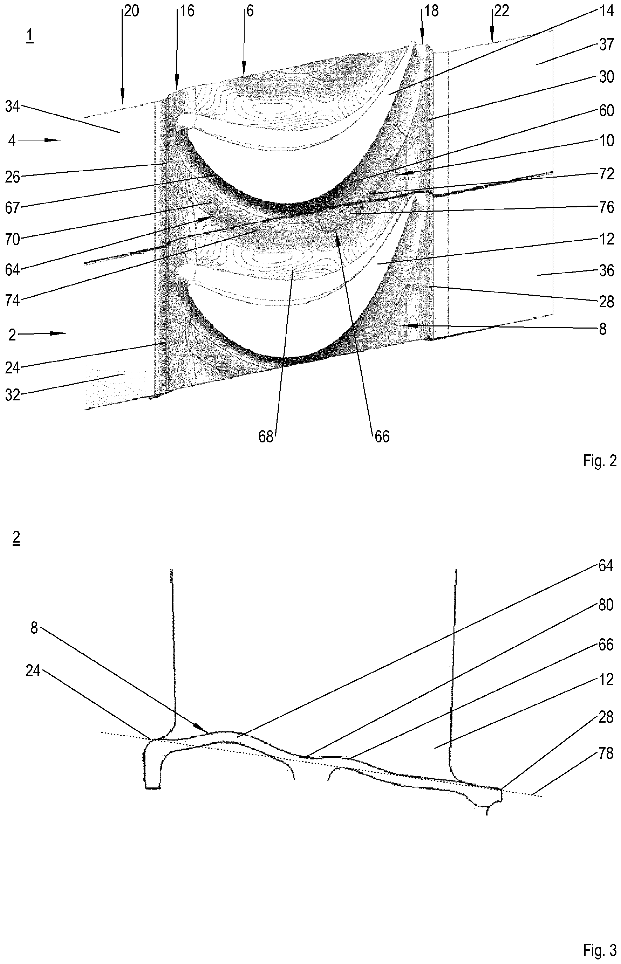

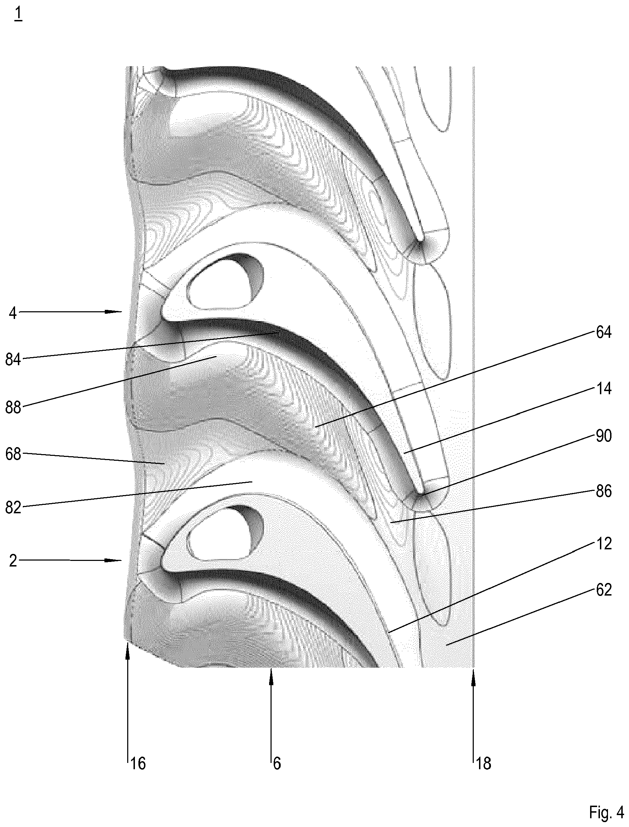

In Figur 1 ist eine perspektivische Darstellung eines Teilbereichs eines erfindungsgemäßen Schaufelgitters 1 einer Strömungsmaschine mit einem ersten Ausführungsbeispiel von erfindungsgemäßen Schaufeln 2, 4 gezeigt. Die Strömungsmaschine ist eine Gasturbine und insbesondere ein Flugtriebwerk. Das Schaufelgitter 1 ist bevorzugterweise turbinenseitig und beispielsweise in einer Niederdruckturbine der Strömungsmaschine angeordnet. Die Schaufeln 2, 4 sind in dem gezeigten Ausführungsbeispiel Laufschaufeln, können jedoch wie beispielsweise in den Figuren 3 und 4 erläutert, auch Leitschaufels sein. Insbesondere sind die Schaufeln 2, 4 Turbinenschaufeln.

Das Schaufelgitter 1 hat eine nabenseitige Seitenwand 6 und eine gehäuseseitige Seitenwand, die einen von einem Heißgas im Wesentlichen in Axialrichtung der Strömungsmaschine durchströmten Heißgaskanal radial begrenzen. Aus Gründen der Übersichtlichkeit ist/sind in Figur 1 und in den folgenden Figuren 2 bis 6 lediglich die nabenseitige bzw. innere Seitenwand 6 gezeigt.

Die nabenseitige Seitenwand 6 wird von in Figur 2 beispielhaft bezifferten nabenseitigen bzw. inneren Plattformen 8, 10 der Schaufeln 2, 4 gebildet, die in Umfangsrichtung nebeneinander angeordnet sind und von denen sich Schaufelblätter 12, 14 in den Heißgaskanal erstrecken. Die nabenseitige Seitenwand 6 hat eine in Strömungsrichtung des Heißgases betrachtet Seitenwandvorderkante 16 und eine Seitenwandhinterkante 18.

Die Seitenwandvorderkante 16 bildet gemäß Figur 1 einen Übergangsbereich zwischen einem zur nabenseitigen Seitenwand 6 radial innen positionierten vorderen bzw. stromaufwärtigen Seitenwandüberhang 20 und der Seitenwand 6. Die Seitenwandhinterkante 18 der Seitenwand 6 bildet in dem im Figur 1 gezeigten Ausführungsbeispiel einen Übergangsbereich zu einem hinteren bzw. stromabwärtigen Seitenwandüberhang 22, der radial innen zum vorderen Seitenwandüberhang 20 positioniert ist.

Entsprechend der Bildung der Seitenwand 6 werden wie in Figur 2 anhand von Bezugsziffern verdeutlicht, die Seitenwandvorderkante 16, die Seitenwandhinterkante 18, der vordere Seitenwandüberhang 20 und der hintere Seitenwandüberhang 22 von in Umfangsrichtung nebeneinanderliegenden einzelnen Plattformvorderkanten 24, 26, Plattformhinterkanten 28, 30, vorderen Plattformüberhängen 32, 34 bzw. hinteren Plattformüberhängen 36, 37 gebildet.

Wie in Figur 1 zu erkennen, ist die Seitenwandvorderkante 16 abgerundet ausgebildet und mit einer Kantenkonturierung versehen. Die Kantenkonturierung ist derart, dass die Seitenwandvorderkante 16 umfangsasymmetrisch ist. Bevorzugterweise ist die Kantenkonturierung bezogen auf eine ideale umfangsymmetrische Seitenvorderkante gleichmäßig wellenartig, wobei im Seitenkantenbereich der Schaufeln 2, 4 jeweils eine sich auf beide Plattformen 8, 10 erstreckende Erhebung 38, 40 und zwischen den Erhebungen 38, 40 jeweils eine Vertiefung 42 angeordnet ist. Somit sind im jeden Seitenkantenbereich der Schaufeln 2, 4 zwei korrespondierende Erhebungsabschnitte 44, 46 angeordnet, die für sich genommen isoliert von der Seitenwandvorderkante 16 die Erhebungen 38, 40 bilden. Die Schaufelblätter 12, 14 sind dabei in dem gezeigten Ausführungsbeispiel mit jeweils einem anströmkantenseitigen Bereich 48 ihrer Wurzelausrundung in einen der Erhebungsabschnitte 46 geführt.

Die Vertiefung 42 ist jeweils zwischen den Erhebungsabschnitten 44, 46 ausgebildet und bevorzugterweise mittig der jeweiligen Plattformvorderkante 24, 26 (s. Figur 2) angeordnet. Die Vertiefung 42 ist derart gegenüber einer idealen Seitenwandkantenlinie bzw. Heißgaskanallinie radial nach innen versetzt, dass sie mit ihrem tiefsten Abschnitt einen radial äußeren Fuß 50 des vorderen Seitenwandüberhangs 20 berührt. Der vordere Seitenwandüberhang 20, der umfangssymmetrisch ist, geht somit zumindest abschnittsweise mit seinem äußeren Fuß 50 unmittelbar in die Vertiefung 42 über. Die Erhebungen 38, 40 bzw. Erhebungsabschnitte 44, 46 sind hingegen von dem äußeren Fuß 50 beabstandet, wobei sich radial erstreckende Freiflächen 52, 54 zwischen dem äußeren Fuß 50 und den Erhebungen 38, 40 bzw. Erhebungsabschnitte 44, 46 nicht-konturiert sind.

In Axialrichtung der Strömungsmaschine und somit vereinfacht in Strömungsrichtung bzw. von dem vorderen Seitenwandüberhang 20 zur Seitenwand 6 betrachtet, ist die Kantenkonturierung elliptisch oder sie setzen sich aus mehreren Kreissegmenten mit unterschiedlichen Radien zusammen.

Die Kantenkonturierung geht in eine umfangsasymmetrische Seitenwand 6 bzw. eine umfangsasymmetrische Seitenwandkonturierung über. In dem in Figur 1 gezeigten Ausführungsbeispiel hat die Seitenwandkonturierung jeweils zwei Berge, die sich über den Seitenkantenbereich der Schaufeln 2, 4 auf die jeweils benachbarte Plattform 8, 10 erstrecken. Die Berge sind hintereinander angeordnet und aufgrund der Perspektive lediglich jeweils als ein Bergabschnitt 56, 58 gezeigt. Der vordere Berg ist über einen nicht bezifferten Kanal von einem saugseitigen Bereich 60 der Wurzelausrundung beabstandet. Der hintere Berg erstreckt sich von einem nicht-konturierten Seitenwandabschnitt 62.

Die Seitenwandkonturierung läuft in Richtung der Seitenwandhinterkante 18 aus. Die Seitenwandhinterkante 18 ist nicht-konturiert und somit umfangssymmetrisch. Ebenso ist der hintere Seitenwandüberhang 22 nicht-konturiert und somit umfangssymmetrisch.

In Figur 2 ist ein nabenseitiger Umfangsabschnitt eines Schaufelgitters 1 gezeigt, das aus einer Vielzahl von den erfindungsgemäßen Schaufeln 2, 4 wie Turbinenlaufschaufeln gemäß einem zweiten Ausführungsbeispiel gebildet ist. Das Schaufelgitter 1 hat einen umfangssymmetrische vorderen Seitenwandüberhang 20, eine umfangsasymmetrische Seitenwandvorderkante 16 , eine umfangsasymmetrische Seitenwand 6, eine umfangssymmetrische Seitenwandhinterkante 18 und einen umfangssymmetrischen hinteren Seitenwandüberhang 22.

Die umfangsasymmetrische Seitenwandvorderkante 16 ist abgerundet und hat eine in Umfangsrichtung betrachtet wellenartige Kantenkonturierung, die in Strömungsrichtung bzw. von dem vorderen Seitenwandüberhang 20 zur Seitenwand 6 betrachtet elliptisch ist oder sich aus mehreren Kreissegmenten mit unterschiedlichen Radien zusammensetzt. Die Kantenkonturierung geht wie beim Ausführungsbeispiel nach Figur 1 in eine umfangsasymmetrische Seitenwandkonturierung der Seitenwand 6 über.

Die Seitenwandkonturierung der Seitenwand 6 weist gemäß dem in Figur 2 gezeigten Ausführungsbeispiel zwei Berge 64, 66 nahe einer Saugseite 67 jeweils eines Schaufelblattes 12, 14 aufweist. Die Berge 64, 66 sind in Strömungsrichtung voneinander beabstandet und erstrecken sich jeweils über Seitenkantenbereiche von Plattformen 8, 10 der benachbarten Schaufeln 2, 4 hinaus. Ein nicht mit den Bergen 64, 66 versehener Bereich der Seitenwand 6 bzw. der Plattformen 8, 10 ist mit einem sich über die Seitenkantenbereiche hinaus erstreckenden Tal 68 versehen. Somit weisen die Plattformen jeweils zwei saugseitige Bergabschnitte 70, 72 und zwei quasi druckseitige Bergabschnitte 74, 76 auf, die mit den jeweils korrespondierenden Bergabschnitten der benachbarten Schaufeln 2, 4 die Berge 64, 66 bilden. Die Berge 64, 66 sind jeweils über einen Kanal von einem saugseitigen Bereich 60 einer Wurzelausrundung beabstandet. Zudem ist die Wurzelausrundung saugseitig auf die jeweils benachbarte Plattform 8, 10 geführt.

In Figur 3 ist ein Schnitt durch ein Ausführungsbeispiel der erfindungsgemäßen Schaufel 2 gezeigt, die als eine Leitschaufel wie eine Turbinenleitschaufel einer Strömungsmaschine ausgebildet ist. Im wesentlichen Unterschied zu den in den Figuren 1 und 2 gezeigten Ausführungsbeispielen hat diese Schaufel 2 keinen vorderen Seitenwandüberhang und keinen hinteren Seitenwandüberhang.

Die in Figur 3 gezeigte Schaufel 2 hat jedoch wie die vorhergehenden Ausführungsbeispiele eine nabenseitige umfangsasymmetrische Plattformvorderkante 24, eine nabenseitige umfangsasymmetrische Plattform 8 und eine nabenseitige umfangssymmetrische Plattformhinterkante 28.

Die umfangsasymmetrische Plattformvorderkante 24 ist abgerundet und hat eine in Umfangsrichtung betrachtet wellenartige Kantenkonturierung, die in Strömungsrichtung betrachtet elliptisch ist oder sich aus mehreren Kreissegmenten mit unterschiedlichen Radien zusammensetzt. Die Kantenkonturierung geht wie bei den Ausführungsbeispielen nach den Figuren 1 und 2 in die Plattform 8 bzw. eine Plattformkonturierung über.

Die Plattform 8 bildet mit ihrer Plattformkonturierung einen Teilbereich einer umfangsasymmetrischen Seitenwandkonturierung. Ausgehend von einer idealen Heißgaskanallinie 78 ist die Plattfomkonturierung derart, dass die Seitenwandkonturierung zwischen jeweils zwei Schaufelblättern 12 einen vorderen Berg 64 und einen hinteren Berg 66 hat, der im Vergleich zum vorderen Berg 64 niedriger ausgebildet ist und der mit dem vorderen Berg 64 über einen zu den Bergen 64, 66 höhenreduzierten Abschnitt 80 verbunden ist. Die Plattformkonturierung läuft in Richtung der umfangssymmetrischen Plattformhinterkante 28 aus, die in dem hier gezeigten Ausführungsbeispiel bevorzugterweise eckig ist.

In Figur 4 ist ein nabenseitiger Umfangsabschnitt eines Schaufelgitters 1 gezeigt, das aus einer Vielzahl von den erfindungsgemäßen Schaufeln 2, 4 wie Turbinenleitaufschaufeln gemäß einem vierten Ausführungsbeispiel gebildet ist. Entsprechend der bevorzugten Ausbildung der Schaufeln 2, 4 als Turbinenleitschaufel hat das Schaufelgitter 1 keinen vorderen Seitenwandüberhang und keinen hinteren Seitenwandüberhang. Es hat jedoch eine umfangsasymmetrische Seitenwandvorderkante 16, eine umfangsasymmetrische Seitenwand 6 und eine umfangssymmetrische Seitenwandhinterkante 18.

Die umfangsasymmetrische Seitenwandvorderkante 16 ist abgerundet und hat eine in Umfangsrichtung betrachtet wellenartige Kantenkonturierung, die in Strömungsrichtung bzw. von dem vordern Seitenwandüberhang zur Seitenwand betrachtet elliptisch ist oder sich aus mehreren Kreissegmenten mit unterschiedlichen Radien zusammensetzt. Die Kantenkonturierung geht wie beim Ausführungsbeispielen nach den vorhergehenden Figuren 1 bis 3 in die umfangsasymmetrische Seitenwand 6 bzw. in deren Seitenwandkonturierung über.

Die Seitenwandwandkonturierung weist einen Berg 64 auf, der sich zwischen Wurzelausrundungen 82, 84 der jeweils benachbarten Schaufelblätter 12, 14 erstreckt und auf Höhe einer idealen Heißgaskanallinie in die Wurzelausrundungen 82, 84 übergeht. Im Bereich der saugseitigen Wurzelausrundung 84 umgreift der Berg 64 einen nicht-konturierten Seitenwandabschnitt 88, von dem sich die saugseitigen Wurzelausrundung 84 stufenlos erhebt. Zudem hat die Seitenwandkonturierung jeweils zwischen zwei Schaufelblättern 12, 14 ein vorderes Tal 68 und ein hinteres Tal 86, die durch den Berg 64 voneinander getrennt sind.

Wie zudem in Figur 4 zu erkennen, läuft die Seitenwandkonturierung an einer ungefähren axialen Position von Abströmkanten 90 der Schaufelblätter 12, 14 aus, sodass zwischen den Abströmkanten 90 und der Seitenwandhinterkante 18 ein nicht-konturierter Seitenwandabschnitt 62 gebildet ist.

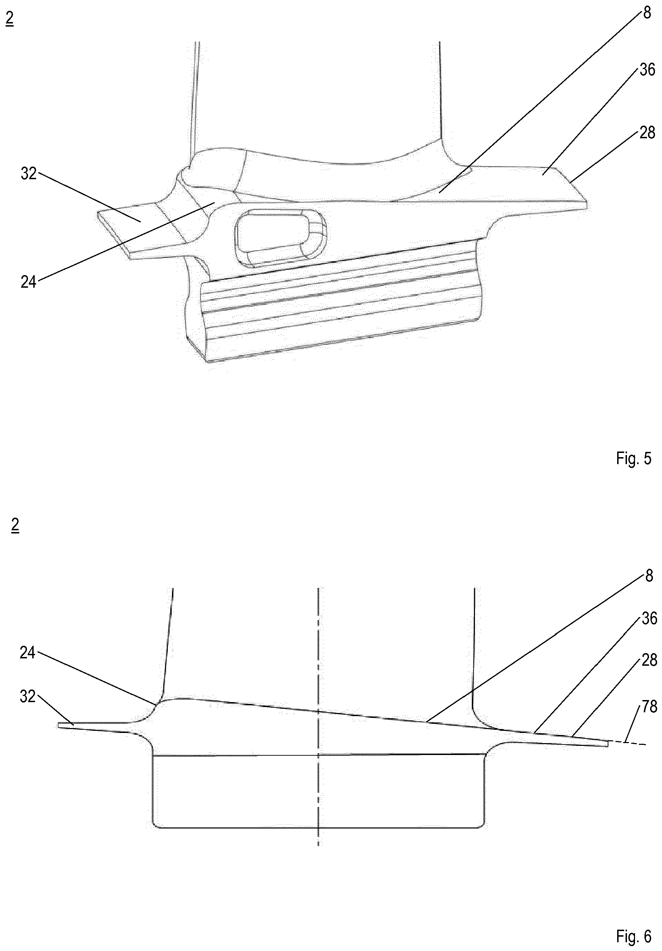

In den Figuren 5 und 6 ist ein nicht zur Erfindung gehörendes Beispiel einer Schaufel 2 gezeigt, die als eine Laufschaufel wie eine Turbinenlaufschaufel einer Strömungsmaschine ausgebildet ist. Die Schaufel 2 hat einen nabenseitigen vorderen Plattformüberhang 32, eine nabenseitigen Plattformvorderkante 24, eine nabenseitigen Plattform 8, eine nabenseitigen Plattformhinterkante 28 und einen nabenseitigen hinteren Plattformüberhang 36.

Im wesentlichen Unterschied zu den Ausführungsbeispielen nach den Figuren 1 bis 4 ist die Plattform 8 nicht-konturiert, sondern umfangssymmetrisch ausgebildet.

Im weiteren wesentlichen Unterschied führt der hintere Plattformüberhang 36 eine ideale Heißgaskanallinie 78 der Plattform 8 fort, so dass dieser im Unterschied zu den Ausführungsbeispielen nach den Figuren 1, 2 und 3 nicht gegenüber der Plattform 8 radial nach innen versetzt ist, sondern die Plattformhinterkante 28 bildet. Entsprechend den Ausführungsbeispielen nach den Figuren 1, 2 und 3 sind der vordere Plattformüberhang 32, der hintere Plattformüberhang 36 und die Plattformhinterkante 28 umfangssymmetrisch.

Die Plattformvorderkante 24 ist abgerundet und hat eine in Umfangsrichtung betrachtet umfangsasymmetrische Kantenkonturierung, die in Strömungsrichtung bzw. von dem vorderen Plattformüberhang 32 zur Plattform 6 betrachtet elliptisch ist oder sich aus mehreren Kreissegmenten mit unterschiedlichen Radien zusammensetzt. Dabei kann die Kantenkonturierung wie bei den vorhergehenden Ausführungsbeispielen in Umfangsrichtung wellenartig sein. Die Kantenkonturierung geht in die umfangssymmetrische Plattformkonturierung über bzw. läuft in dieser aus.

Es sei erwähnt, dass, auch wenn sich in den Figuren 1 bis 6 lediglich auf die nabenseitige bzw. innere Seitenwand 6 / Plattformen 8, 10 bezogen wird, selbstverständlich sämtliche Überlegungen bzw. Konturierungen bzw. Nicht-Konturierungen auch bei einer gehäuseseitigen bzw. äußeren Seitenwand / Plattform Anwendung finden können. Insbesondere können sowohl die nabenseitige Seitenwand 6 als auch die gehäuseseitige Seitenwand sowie die hierfür notwendigen Schaufelplattformen 8, 10 zum Begrenzen eines Heißgaskanals einer Strömungsmaschine entsprechend konturiert sein.

Offenbart ist ein Schaufelgitter für eine Strömungsmaschine, die eine innere Seitenwand und eine äußere Seitenwand zum Begrenzen eines von einem Heißgas durchströmten Heißgaskanals der Strömungsmaschine hat, wobei zumindest einer der Seitenwände eine abgerundete Seitenwandvorderkante hat, die mit einer umfangsasymmetrischen Kantenkonturierung versehen ist, die elliptisch ist oder aus mehreren Kreissegmenten zusammengesetzt ist, eine Schaufel für ein derartiges Schaufelgitter und eine Strömungsmaschine.

### Bezugszeichenliste

- 1: Schaufelgitter
- 2: Schaufel
- 4: Schaufel
- 6: innere / nabenseitige Seitenwand
- 8: Plattform / Schaufelplattform
- 10: Plattform / Schaufelplattform
- 12: Schaufelblatt
- 14: Schaufelblatt
- 16: Seitenwandvorderkante
- 18: Seitenwandhinterkante
- 20: vorderer Seitenwandüberhang
- 22: hinterer Seitenwandüberhang
- 24: Plattformvorderkante
- 26: Plattformvorderkante
- 28: Plattformhinterkante
- 30: Plattformhinterkante
- 32: vorderer Plattformüberhang
- 34: vorderer Plattformüberhang
- 36: hinterer Plattformüberhang
- 37: hinterer Plattformüberhang
- 38: Erhebung
- 40: Erhebung
- 42: Vertiefung
- 44: Erhebungsabschnitt
- 46: Erhebungsabschnitt
- 48: anströmkantenseitiger Bereich einer Wurzelausrundung
- 50: äußerer Fuß
- 52: Freifläche
- 54: Freifläche
- 56: Bergabschnitt
- 58: Bergabschnitt
- 60: saugseitiger Bereich einer Wurzelausrundung
- 62: nicht-konturierter Seitenwandabschnitt
- 64: Berg
- 66: Berg
- 67: Saugseite
- 68: Tal
- 70: Bergabschnitt
- 72: Bergabschnitt
- 74: Bergabschnitt
- 76: Bergabschnitt
- 78: ideale Heißgaskanallinie / ideale Plattformlinie
- 80: höhenreduzierter Abschnitt
- 82: Wurzelausrundung
- 84: Wurzelausrundung
- 86: Tal
- 88: nicht-konturierter Seitenwandabschnitt
- 90: Abströmkante

## Patentansprüche

1. Schaufelgitter (1) einer Strömungsmaschine, das eine innere Seitenwand (6) und eine äußere Seitenwand zum Begrenzen eines von einem Heißgas durchströmten Heißgaskanals der Strömungsmaschine hat, wobei zumindest eine der Seitenwände (6) eine abgerundete Seitenwandvorderkante (16) hat, die mit einer umfangsasymmetrischen Kantenkonturierung versehen ist, wobei die Kantenkonturierung elliptisch ist oder aus einem oder mehreren Kreissegmenten zusammengesetzt ist, wobei das Schaufelgitter (1) mindestens zwei Schaufeln (2, 4) mit je einem Schaufelblatt (12, 14) umfasst, wobei um jedes Schaufelblatt (12, 14) eine Wurzelausrundung (60, 82, 84) angeordnet ist, **dadurch gekennzeichnet, dass** mindestens einer der Seitenwände (6) derart konturiert ist, dass sich ein Berg (64) oder zwei Berge (56, 58; 64, 66) zwischen den Wurzelausrundungen (82, 84) der jeweils benachbarten Schaufelblätter (12. 14) erstrecken.

2. Schaufelgitter nach Anspruch 1, wobei die Kantenkonturierung in Umfangsrichtung wellenartig ist.

3. Schaufelgitter nach Anspruch 1 oder 2, wobei Wurzelausrundungen von Schaufelblättern (12, 14) in die Kantenkonturierung hineingeführt sind.

4. Schaufelgitter nach einem der vorhergehenden Ansprüche, wobei bei zwei Bergen (56, 58, 64, 66) die jeweils beiden Berge (56, 58; 64, 66) in Strömungsrichtung voneinander beabstandet sind.

5. Schaufelgitter nach einem der vorhergehenden Ansprüche, wobei bei zwei Bergen (64, 66) der Berg (64) auf der Höhe einer idealen Heißgaskanallinie in die Wurzelausrundung (82, 84) übergeht.

6. Schaufelgitter nach einem der vorhergehenden Ansprüche, wobei bei zwei Bergen (64, 66) die beiden Berge (64, 66) in der Nähe einer Saugseite (67) eines Schaufelblattes (12. 14) angeordnet sind.

7. Schaufelgitter nach einem der vorhergehenden Ansprüche, wobei bei zwei Bergen (64, 66) der hintere Berg (66) niedriger ist als der vordere Berg (64) und über einen höhenreduzierten Abschnitt (80) verbunden ist, der über einer idealen Heißkanallinie (78) verläuft.

8. Schaufelgitter nach einem der Ansprüche 1 bis 6, wobei bei zwei Bergen (56, 58; 64, 66) ein vorderer Seitenwandüberhang (20) konturfrei ist.

9. Schaufelgitter nach einem der Ansprüche 1 bis 6 oder 8, wobei bei zwei Bergen (56, 58; 64, 66) ein hinterer Seitenwandüberhang (22) konturfrei ist.

10. Schaufelgitter nach Anspruch 1, 2 oder 3, wobei bei einem Berg (64) eine innere Seitenwandhinterkante (18) konturfrei ist.

11. Strömungsmaschine mit zumindest einem Schaufelgitter nach einem der Ansprüche 1 bis 10.

## Claims

1. Blade cascade (1) of a turbomachine, comprising an inner side wall (6) and an outer side wall for delimiting a hot gas channel of the turbomachine, through which channel a hot gas flows, at least one of the side walls (6) having a rounded side wall front edge (16) that is provided with a peripherally asymmetrical edge contour, the edge contour being elliptical or composed of one or more circular segments, the blade cascade (1) comprising at least two blades (2, 4) each having an airfoil (12, 14), a root fillet (60, 82, 84) being arranged around each airfoil (12, 14), **characterized in that** at least one of the side walls (6) is contoured such that a peak (64) or two peaks (56, 58; 64, 66) extend between the root fillets (82, 84) of the respectively adjacent airfoils (12, 14).

2. Blade cascade according to claim 1, wherein the edge contour is wave-like in the peripheral direction.

3. Blade cascade according to either claim 1 or claim 2, wherein root fillets of airfoils (12, 14) are guided into the edge contour.

4. Blade cascade according to any of the preceding claims, wherein, in the case of two peaks (56, 58, 64, 66), the two peaks (56, 58; 64, 66) are spaced apart from one another in the direction of flow in each case.

5. Blade cascade according to any of the preceding claims, wherein, in the case of two peaks (64, 66), the peak (64) transitions into the root fillet (82, 84) at the level of an ideal hot gas channel line.

6. Blade cascade according to any of the preceding claims, wherein, in the case of two peaks (64, 66), the two peaks (64, 66) are arranged in the vicinity of a suction side (67) of an airfoil (12, 14).

7. Blade cascade according to any of the preceding claims, wherein, in the case of two peaks (64, 66), the rear peak (66) is lower than the front peak (64) and is connected by means of a height-reduced portion (80) that extends over an ideal hot gas channel line (78).

8. Blade cascade according to any of claims 1 to 6, wherein, in the case of two peaks (56, 58; 64, 66), a front side wall overhang (20) is free of contours.

9. Blade cascade according to any of claims 1 to 6 or 8, wherein, in the case of two peaks (56, 58; 64, 66), a rear side wall overhang (22) is free of contours.

10. Blade cascade according to claim 1, claim 2 or claim 3, wherein, in the case of one peak (64), an inner side-wall rear edge (18) is free of contours.

11. Turbomachine comprising at least one blade cascade according to any of claims 1 to 10.

## Revendications

1. Grille d'aubes (1) d'une turbomachine possédant une paroi latérale intérieure (6) et une paroi latérale extérieure pour délimiter un canal de gaz chaud de la turbomachine traversé par un gaz chaud, au moins l'une des parois latérales (6) possédant un bord avant de paroi latérale (16) arrondi pourvu d'un contournage de bord asymétrique sur la périphérie, le contournage de bord étant elliptique ou composé d'un ou de plusieurs segments de cercle, la grille d'aubes (1) présentant au moins deux aubes (2, 4) comprenant chacune une lame (12, 14), une courbure radiculaire (60, 82, 84) étant disposée autour de chaque lame (12, 14), **caractérisée en ce qu'**au moins l'une des parois latérales (6) est contournée de sorte qu'une montagne (64) ou deux montagnes (56, 58, 64, 66) s'étendent entre les courbures radiculaires (82, 84) des lames adjacentes respectives (12, 14).

2. Grille d'aubes selon la revendication 1, dans laquelle le contournage de bord est ondulé dans la direction circonférentielle.

3. Grille d'aubes selon la revendication 1 ou 2, dans laquelle les courbures radiculaires des lames (12, 14) sont guidées dans le contournage de bord.

4. Grille d'aubes selon l'une des revendications précédentes, dans laquelle, dans le cas de deux montagnes (56, 58 ; 64, 66), les deux montagnes respectives (56, 58 ; 64, 66) sont espacées l'une de l'autre dans la direction d'écoulement.

5. Grille d'aubes selon l'une des revendications précédentes, dans laquelle, dans le cas de deux montagnes (64, 66), la montagne (64) se prolonge dans la courbure radiculaire (82, 84) à la hauteur d'une ligne de canal de gaz chaud idéale.

6. Grille d'aubes selon l'une des revendications précédentes, dans laquelle, dans le cas de deux montagnes (64, 66), les deux montagnes (64, 66) sont disposées à proximité d'un côté d'aspiration (67) d'une lame (12, 14).

7. Grille d'aubes selon l'une des revendications précédentes, dans laquelle, dans le cas de deux montagnes (64, 66), la montagne arrière (66) est plus basse que la montagne avant (64) et est reliée par une section à hauteur réduite (80) s'étendant sur une ligne de canal de gaz chaud idéale (78).

8. Grille d'aubes selon l'une des revendications 1 à 6, dans laquelle, dans le cas de deux montagnes (56, 58 ; 64, 66), une saillie de paroi latérale avant (20) ne possède pas de contour.

9. Grille d'aubes selon l'une des revendications 1 à 6 ou 8, dans laquelle, dans le cas de deux montagnes (56, 58 ; 64, 66), une saillie de paroi latérale arrière (22) ne possède pas de contour.

10. Grille d'aubes selon la revendication 1, 2 ou 3, dans laquelle, dans le cas d'une montagne (64), un bord arrière de paroi latérale intérieure (18) ne possède pas de contour.

11. Turbomachine possédant au moins une grille d'aubes selon l'une des revendications 1 à 10.
